# EUROPEAN PATENT APPLICATION

(11) **EP 4 749 801 A1**
(43) Date of publication of application: **27.05.2026**
(21) Application number: 23950522.5
(22) Date of filing: 11.12.2023
(51) Int. Cl.: H01M 50/503, H01M 50/528, H01M 50/516

(54) **BATTERY CELL, BATTERY, AND ELECTRIC DEVICE**

(30) Priority: 01.09.2023 CN 202322363695 U
(71) Applicant: Contemporary Amperex Technology Co., Limited, Ningde, Fujian 352100 (CN)
(72) Inventor: LI, Zhen, Ningde, Fujian 352100 (CN); WANG, Zejiang, Ningde, Fujian 352100 (CN); DAI, Xuexian, Ningde, Fujian 352100 (CN)
(74) Representative: Ziebig Hengelhaupt Intellectual Property Attorneys Patentanwaltskanzlei PartGmbB
(86) International application number: PCT/CN2023/137992
(87) International publication number: WO 2025/043956

(57) **Abstract**

The present application provides a battery cell, a battery, and an electric apparatus. The battery cell (200) includes a housing body (221), an electrode assembly (21), and a current collecting disc (30). The electrode assembly (21) is installed in the housing body (221), and the electrode assembly (21) is provided with a tab (211). The current collecting disc (30) includes a first connecting piece (31) and a second connecting piece (32), where the first connecting piece (31) is mechanically connected to the second connecting piece (32), the first connecting piece (31) is welded to the tab (211), and the second connecting piece (32) is welded to the housing body (221). The first connecting piece (31) is welded to the tab (211), the second connecting piece (32) is welded to the housing body (221), and the first connecting piece (31) is mechanically connected to the second connecting piece (32), which can prevent the occurrence of cracks due to welding of the first connecting piece (31) to the second connecting piece (32) to a certain extent.

## Description

The present application claims priority to Chinese Patent Application No. 202322363695.7, filed with the China National Intellectual Property Administration on September 1, 2023, and entitled "BATTERY CELL, BATTERY, AND ELECTRIC APPARATUS", which is incorporated herein by reference in its entirety.

### TECHNICAL FIELD

The present application pertains to the field of battery technologies, and more specifically, relates to a battery cell, a battery, and an electric apparatus.

### BACKGROUND

The description herein merely provides background information related to the present application and does not necessarily constitute the prior art. For electric vehicles, battery technologies are an important factor in connection with their development. Cylindrical batteries require the use of a current collecting disc to connect a negative electrode tab to a housing body, thereby using the housing body as a negative electrode terminal. The current collecting disc is typically made by welding materials that are easily welded to the tab and the housing body. However, for this type of current collecting disc, when welding different materials, cracks are prone to occur at a weld joint.

### SUMMARY

An objective of embodiments of the present application is to provide a battery cell, a battery, and an electric apparatus to address the issue in the related art where cracks are prone to occur during the fabrication of a composite current collecting disc.

According to a first aspect, an embodiment of the present application provides a battery cell, including:
a housing body;
an electrode assembly, installed in the housing body, the electrode assembly being provided with a tab; and
a current collecting disc, including a first connecting piece and a second connecting piece, the first connecting piece being mechanically connected to the second connecting piece; where
the first connecting piece is welded to the tab, and the second connecting piece is welded to the housing body.

In the technical solution of this embodiment of the present application, the first connecting piece is mechanically connected to the second connecting piece to form the current collecting disc, such that the first connecting piece is welded to the tab of the battery cell, and the second connecting piece is welded to the housing body of the battery cell, thereby achieving the connection of the current collecting disc to the housing body and the tab, enhancing the stability and reliability of the connection. The first connecting piece is mechanically connected to the second connecting piece, to some extent, the occurrence of cracks due to welding of the first connecting piece to the second connecting piece can be prevented, and the stability of the connection between the first connecting piece and the second connecting piece and current conduction capability is improved, thereby making the charging and discharging of the battery cell more stable, and thus improving the quality of the battery cell.

In some embodiments, the first connecting piece is connected to the second connecting piece through a riveting post.

Using the riveting post to connect the first connecting piece to the second connecting piece provides convenient connection and ensures a stable and firm connection structure.

In some embodiments, the riveting post includes a first riveting post provided on the first connecting piece, and the second connecting piece is provided with a first opening for inserting and riveting the first riveting post.

The first riveting post is provided on the first connecting piece, the first opening is provided on the second connecting piece, and the first riveting post is inserted into the first opening, so that the first connecting piece is riveted and connected to the second connecting piece, stable and the connection is convenient and stable.

In some embodiments, an inner diameter of an end of the first opening away from the first connecting piece is larger than an inner diameter of another end thereof.

By setting the inner diameter of the end of the first opening away from the first connecting piece to be larger, a more stable fixed connection with the first riveting post can be achieved during riveting, so that the first connecting piece and the second connecting piece are connected more stably.

In some embodiments, the first riveting post is integrally formed with the first connecting piece.

Integrally forming the first riveting post with the first connecting piece can enhance the connection strength between the first riveting post and the first connecting piece.

In some embodiments, the riveting post includes a second riveting post provided on the second connecting piece, and the first connecting piece is provided with a second opening for inserting and riveting the second riveting post.

The second riveting post is provided on the second connecting piece, the second opening is provided on the first connecting piece, and the second riveting post is inserted into the second opening, so that the first connecting piece is riveted and connected to the second connecting piece, and the connection is convenient and stable.

In some embodiments, an inner diameter of an end of the second opening away from the second connecting piece is larger than an inner diameter of another end thereof.

By setting the inner diameter of the end of the second opening away from the second connecting piece to be larger, a more stable fixed connection with the second riveting post can be achieved during riveting, so that the first connecting piece and the second connecting piece are connected more stably.

In some embodiments, the second riveting post is integrally formed with the second connecting piece.

Integrally forming the second riveting post with the second connecting piece can enhance the connection strength between the second riveting post and the second connecting piece.

In some embodiments, the riveting post includes a third riveting post, the second connecting piece is provided with the first opening, the first connecting piece is provided with the second opening corresponding to the position of the first opening, and two ends of the third riveting post are respectively inserted and riveted into the first opening and the second opening.

The second opening is provided on the first connecting piece, the first opening is correspondingly provided on the second connecting piece, and two ends of the third riveting post are inserted and riveted into the first opening and the second opening, so that the first connecting piece is riveted and connected to the second connecting piece, and the connection is convenient.

In some embodiments, a height of at least one riveting post protruding from a surface of the first connecting piece away from the second connecting piece is less than or equal to 0.1 mm; and/or
an end of at least one riveting post away from the second connecting piece is flush with a surface of the first connecting piece away from the second connecting piece; and/or
an end of at least one riveting post away from the second connecting piece is recessed relative to a surface of the first connecting piece away from the second connecting piece; and/or
an end of at least one riveting post away from the first connecting piece is flush with a surface of the second connecting piece away from the first connecting piece; and/or
an end of at least one riveting post away from the first connecting piece is recessed relative to a surface of the second connecting piece away from the first connecting piece.

Since the tab of the electrode assembly has a certain deformation space within the housing body, setting the height of at least one riveting post protruding from the surface of the first connecting piece away from the second connecting piece to be less than or equal to 0.1 mm allows for a wider design range for the dimension of the riveting post. This also facilitates the installation and use of the riveting post, enabling the riveting connection between the first connecting piece and the second connecting piece.

Setting the end of the riveting post away from the second connecting piece to be flush with the surface of the first connecting piece away from the second connecting piece facilitates welding of the first connecting piece to the tab, reducing the effect of the riveting post on the welding of the tab to the first connecting piece.

Setting the end of the riveting post away from the second connecting piece to be recessed relative to the surface of the first connecting piece away from the second connecting piece can reduce the effect of the riveting post on welding when the first connecting piece is welded to the tab, thereby improving welding quality.

Setting the end of the riveting post away from the first connecting piece to be flush with the surface of the second connecting piece away from the first connecting piece facilitates welding of the second connecting piece to the housing body, reducing the effect of the riveting post on the welding of the second connecting piece to the housing body.

Setting the end of the riveting post away from the first connecting piece to be recessed relative to the surface of the second connecting piece away from the first connecting piece can reduce the effect of the riveting post on welding when the second connecting piece is welded to the housing body, thereby improving welding quality.

In some embodiments, the first connecting piece and the second connecting piece are stacked, and the second connecting piece is provided with an opening exposing a partial region of the first connecting piece.

Stacking the first connecting piece and the second connecting piece facilitates the connection between the first connecting piece and the second connecting piece; and providing an opening on the second connecting piece to expose a partial region of the first connecting piece facilitates welding of the first connecting piece to the tab.

In some embodiments, an outer profile of the second connecting piece is circular, the first connecting piece is circular, and the first connecting piece is coaxially arranged with the second connecting piece.

Setting the outer profile of the second connecting piece to be circular facilitates the application in the cylindrical battery cell, enabling convenient welding to the housing body. Setting the first connecting piece to be circular and coaxially arranged with the second connecting piece facilitates the application in the cylindrical battery cell for welding to the tab.

In some embodiments, the opening is circular.

Setting the opening to be circular facilitates the application in the cylindrical battery cell, and the exposed portion of the first connecting piece is also circular, facilitating welding of the first connecting piece to the tab, and increasing a welding area between the first connecting piece and the tab, thereby enhancing welding stability.

In some embodiments, the first connecting piece is provided with a through hole at a position corresponding to the center of the opening.

Providing a through hole on the first connecting piece can provide a positioning function during welding of the first connecting piece to the tab. Additionally, when a pressure relief mechanism is provided on a side of the housing body corresponding to the current collecting disc, and when the battery cell swells and relieves pressure, this facilitates the ejection of active materials from the housing body, reducing the risk of the first connecting piece blocking the pressure relief mechanism and enhancing the reliability of the battery cell.

According to a second aspect, an embodiment of the present application provides a battery, including the battery cell as described in the above embodiments.

According to a third aspect, an embodiment of the present application provides an electric apparatus, including the battery as described in the above embodiments.

The foregoing descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

To describe the technical solutions in some embodiments of the present application more clearly, the following briefly describes the accompanying drawings required for describing the embodiments or exemplary technologies. Apparently, the accompanying drawings in the following description show merely some embodiments of the present application, and persons of ordinary skill in the art may still derive other drawings from these accompanying drawings without creative efforts.
FIG. 1 is a schematic structural diagram of a vehicle according to some embodiments of the present application;
FIG. 2 is a schematic structural exploded view of a battery according to some embodiments of the present application;
FIG. 3 is a schematic structural cross-sectional view of a battery cell according to some embodiments of the present application;
FIG. 4 is a schematic structural bottom view of a battery cell according to some embodiments of the present application;
FIG. 5 is a schematic structural diagram of a first type of current collecting disc according to some embodiments of the present application;
FIG. 6 is a schematic structural exploded view of the current collecting disc in FIG. 5;
FIG. 7 is a schematic structural diagram of a portion of the second connecting piece in FIG. 6;
FIG. 8 is a schematic structural cross-sectional view of the current collecting disc in FIG. 5;
FIG. 9 is a schematic structural cross-sectional view of a second type of current collecting disc according to some embodiments of the present application;
FIG. 10 is a schematic structural cross-sectional view of a third type of current collecting disc according to some embodiments of the present application;
FIG. 11 is a schematic structural cross-sectional view of a fourth type of current collecting disc according to some embodiments of the present application;
FIG. 12 is a schematic structural cross-sectional view of a fifth type of current collecting disc according to some embodiments of the present application; and
FIG. 13 is a schematic structural diagram of a sixth type of current collecting disc according to some embodiments of the present application.

Reference signs in the drawings:
1000. vehicle; 1001. battery; 1002. controller; 1003. motor;
100. box; 101. first portion; 102. second portion;
200. battery cell; 21. electrode assembly; 211. tab; 22. housing; 221. housing body; 2211. cylinder; 2212. bottom cover; 222. end cover;
30. current collecting disc; 31. first connecting piece; 310. through hole; 3101. weld mark; 311. second opening; 32. second connecting piece; 320. opening; 3201. welding zone; 321. first opening; 33. riveting post; 331. first riveting post; 332. second riveting post; and 333. third riveting post.

### DESCRIPTION OF EMBODIMENTS

To describe the technical problems solved by the present application, technical solutions, and beneficial effects more clearly, the following further describes the present application in detail with reference to the embodiments and accompanying drawings. It should be understood that the specific embodiments described herein are merely used to explain the present application but are not intended to limit the present application.

Unless otherwise defined, all technical and scientific terms used herein shall have the same meanings as commonly understood by persons skilled in the art to which the present application relates. The terms used herein are intended to merely describe the specific embodiments rather than to limit the present application. The terms "include", "comprise", and "have" and any other variations thereof in the specification, claims and brief description of drawings of the present application are intended to cover non-exclusive inclusions.

In the description of the embodiments of the present application, the technical terms "first", "second", and the like are merely intended to distinguish between different objects, and shall not be understood as any indication or implication of relative importance or any implicit indication of the number, sequence or primary-secondary relationship of the technical features indicated. Therefore, a feature limited by "first" or "second" can explicitly or implicitly include one or more such features.

In this specification, reference to "embodiment" means that specific features, structures, or characteristics described with reference to the embodiments may be included in at least one embodiment of the present application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of the present application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the descriptions of the embodiments of the present application, the term "multiple" means more than two (inclusive). Similarly, "multiple groups" means more than two (inclusive) groups, and "multiple pieces" means more than two (inclusive) pieces. "A plurality of" means one or more unless otherwise specifically stated.

In the description of the embodiments of the present application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of the present application rather than indicating or implying that the means or components mentioned must have specific orientations, or must be constructed or manipulated according to specific orientations, and therefore shall not be construed as any limitations on embodiments of the present application.

In the descriptions of the embodiments of the present application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in the present application as appropriate to specific situations.

In the description of the embodiments of the present application, unless otherwise specified and defined explicitly, when a component is referred to as being "fastened to" or "disposed on" another component, it may be directly or indirectly fastened to the another component. When a component is referred to as being "connected to" another component, it may be directly or indirectly connected to the another component.

In the description of the embodiments of the present application, unless otherwise expressly specified and limited, the technical term "adjacent" means being positionally close. For example, when there are three components A₁, A₂, and B, if the distance between A₁ and B is greater than the distance between A₂ and B, then A₂ is closer to B compared to A₁. In other words, A₂ is adjacent to B, and it can also be said that B is adjacent to A₂. For another example, when there are multiple components C, and the plurality of components C are denoted as C₁, C₂, ..., and C_{N}, if one of the components C, such as C₂, is closer to component B compared to other components C, then B is adjacent to C₂, and it can also be said that C₂ is adjacent to B.

A battery cell in the embodiments of the present application includes, but is not limited to, a lithium-ion secondary battery, a lithium-ion primary battery, a lithium-sulfur battery, a sodium-lithium-ion battery, a sodium-ion battery, a magnesium-ion battery, or the like. The shape of the battery cell includes, but is not limited to, cylindrical, elliptical cylindrical, hexagonal prismatic, or other shapes. The embodiments of the present application are mainly described by using a cylindrical battery cell.

The battery mentioned in the embodiments of the present application is a single physical module that includes one or more battery cells for providing higher voltage and capacity. For example, the battery mentioned in the present application may include a battery module, a battery pack, or the like. The battery typically includes a box for packaging one or more battery cells. The box can, to some extent, prevent a liquid or another foreign matter from affecting charging or discharging of the battery cells. In some cases, the battery cell may alternatively be used directly, that is, the battery may alternatively include no box, which is not limited herein.

In the battery, under a condition that multiple battery cells are provided, the multiple battery cells may be connected in series, parallel, or series-parallel, where being connected in series-parallel means a combination of series and parallel connections of the multiple battery cells. The multiple battery cells may be directly connected in series, parallel, or series-parallel, and then an entirety of the multiple battery cells is accommodated in the box; or certainly, the battery may be formed by the multiple battery cells being connected in series, parallel, or series-parallel first to form a battery module and then multiple battery modules being connected in series, parallel, or series-parallel to form an entirety which is accommodated in the box. The battery may further include other structures. For example, the battery may further include a busbar configured to implement electrical connection between the multiple battery cells.

The battery cell in the embodiments of the present application includes an electrode assembly and a housing, where the housing includes an end cover and a housing body, the electrode assembly is installed in the housing body, the end cover fits the housing body, and an electrolyte is injected into the housing body.

The electrode assembly is also referred to as a cell. The electrode assembly includes a positive electrode plate, a negative electrode plate, and a separator. The electrode assembly works mainly depending on migration of metal ions between the positive electrode plate and the negative electrode plate. The positive electrode plate includes a positive electrode current collector and a positive electrode active material layer. The positive electrode active material layer is applied on a surface of the positive electrode current collector. The part of the positive electrode current collector not coated with the positive electrode active material layer protrudes out of the part of the positive electrode current collector coated with the positive electrode active material layer. The part not coated with the positive electrode active material layer serves as a positive electrode tab or a metal conductor is welded to and led out of the positive electrode current collector as the positive electrode tab. A lithium-ion battery is used as an example, in which a positive electrode current collector may be made of aluminum, and a positive electrode active material may be lithium cobalt oxide, lithium iron phosphate, ternary lithium, lithium manganate oxide, or the like. The negative electrode plate includes a negative electrode current collector and a negative electrode active material layer. The negative electrode active material layer is applied on a surface of the negative electrode current collector. The part of the negative electrode current collector not coated with the negative electrode active material layer protrudes out of the part of the negative electrode current collector coated with the negative electrode active material layer. The part not coated with the negative electrode active material layer serves as a negative electrode tab or a metal conductor is welded to and led out of the negative electrode current collector as the negative electrode tab. The negative electrode current collector may be made of copper, and the negative electrode active material may be made of carbon, silicon, or the like.

The electrode assembly may be a wound structure. The wound structure typically involves welding the tab to the current collector, arranging the parts in a sequence of positive electrode plate - separator - negative electrode plate - separator, and then winding the parts into a cylindrical or other columnar shape. The separator may be made of PP (Polypropylene, polypropylene) or PE (Polyethylene, polyethylene). The separator is an insulating film disposed between the positive electrode plate and the negative electrode plate. A main function of the separator is to separate the positive and negative electrodes and prevent the electrons in the battery from passing freely to avoid a short circuit, while allowing ions in an electrolyte to freely pass between the positive and negative electrodes to form a circuit between the positive and negative electrodes. The positive electrode plate and negative electrode plate are collectively referred to as electrode plates. The positive electrode tab and negative electrode tab are collectively referred to as tabs.

After the electrode assembly is manufactured, the electrode assembly needs to be mounted in the housing body and an electrolyte is injected to immerse the electrode assembly in the electrolyte so that the electrode assembly can fully absorb the electrolyte. The electrolyte provides some active ions as conductive ions during the charging and discharging process. In addition, the electrolyte further provides ion channels or carriers, allowing ions to move freely therein to achieve electrical conduction between the electrode plates.

To facilitate the charging and discharging of the battery cell, the battery cell is generally provided with electrode terminals. The electrode terminals are conductive components provided on the housing of the battery cell and connected to the tab of the electrode assembly to output electrical energy from the battery cell or to charge the battery cell. Typically, a battery cell has two electrode terminals, the two electrode terminals are respectively connected to the positive and negative electrode tabs of the electrode assembly. The electrode terminal connected to the positive electrode tab is a positive electrode terminal, and the electrode terminal connected to the negative electrode tab is a negative electrode terminal.

The end cover is a component that covers an opening of the housing body to isolate an internal environment of the battery cell from an external environment. The shape of the end cover may be adapted to the shape of the housing body such that the end cover fits with the housing body. Optionally, the end cover may be made of a material with specified hardness and strength (for example, aluminum alloy), so that the end cover is less prone to deformation when subjected to extrusion or collision, allowing the battery cell to have higher structural strength and enhanced reliability.

The housing body is an assembly configured to cooperate with the end cover to form the internal environment of the battery cell, where the formed internal environment can be configured to accommodate the electrode assembly, the electrolyte, and other components. The housing body and the end cover may be independent components, an opening may be provided in the housing body, and the end cover covers the opening to form the internal environment of the battery cell. The housing body may be of various shapes and sizes, such as a cylindrical shape, and a hexagonal prism shape. Specifically, the shape of the housing body may be determined according to a specific shape and size of the battery cell. The housing body may be made of various materials. The materials include, but are not limited to, iron, aluminum, stainless steel, or aluminum alloy.

For a columnar battery cell, the housing body generally includes a cylinder and a bottom cover, where the bottom cover covers one end of the cylinder, and the end cover covers another end to form the housing of the battery cell. The bottom of the housing body refers to an end of the housing body away from the end cover. For the housing body including the cylinder and the bottom cover, the bottom of the housing body is generally the bottom cover. For the columnar battery cell, the bottom of the housing body thereof is generally used as the negative electrode, that is, the bottom cover is used as the negative electrode. The cylinder refers to a cylindrical housing structure forming the main part of the housing body, and the bottom cover refers to a cover structure covering one end of the cylinder, with the bottom cover covering one end of the cylinder to form a housing body structure. The bottom cover and the cylinder may be separately manufactured and then welded together. Certainly, the bottom cover and the cylinder may be integrally formed.

Using the bottom of the housing body of the battery cell as the negative electrode requires extending the negative electrode of the electrode assembly to the housing body. For example, the negative electrode tab needs to be welded to the housing body to form a current-conducting structure, particularly welded to the bottom cover to form a current-conducting structure. However, the negative electrode tab of the electrode assembly is generally made of copper, and the housing body is generally made of steel or aluminum alloy. Due to the different materials of the tab and the housing body, the coefficients of thermal expansion of different materials during welding are also different, resulting in that weld cracks are easily generated, or the electrode assembly is easily damaged. To address this issue, a current collecting disc structure with two stacked materials is commonly used. For example, a layer of copper sheet and a layer of steel sheet are provided, where the copper sheet is welded to the tab, and the steel sheet is welded to the housing body to reduce welding of the current collecting disc to the housing body, reducing the risk of the occurrence of cracks between the current collecting disc and the tab during welding. However, the current collecting disc is generally formed by welding the copper sheet to the steel sheet to form a composite structure, during manufacturing of the current collecting disc, cracks are prone to occur at a weld joint, affecting the quality of the battery cell.

Based on the above considerations, to address the issue of the prone occurrence of weld cracks during manufacturing of a composite current collecting disc, which affects the quality of the battery cell, an embodiment of the present application provides a battery cell. The first connecting piece is connected to the second connecting piece to form the current collecting disc, so that the first connecting piece is welded to the tab of the battery cell, and the second connecting piece is welded to the housing body of the battery cell, reducing the risk of the occurrence of weld cracks when connecting the current collecting disc to the housing body and the tab. Additionally, mechanically connecting the first connecting piece to the second connecting piece can, to some extent, prevent occurrence of cracks due to welding of the first connecting piece to the second connecting piece, and enhance the connection stability and current conduction capability between the first connecting piece and the second connecting piece, thereby improving the quality of the battery cell.

The battery cell disclosed in the embodiments of the present application can be used in electric apparatuses using a battery as a power source or in various energy storage systems using a battery as an energy storage element, such as energy storage power system applied to a hydroelectric, thermal, wind, and solar power plant. The electric apparatus may include, but is not limited to, a mobile phone, a tablet, a laptop computer, an electric toy, an electric tool, an electric motorcycle, an electric car, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus provided in an embodiment of the present application being a vehicle is used as an example for description.

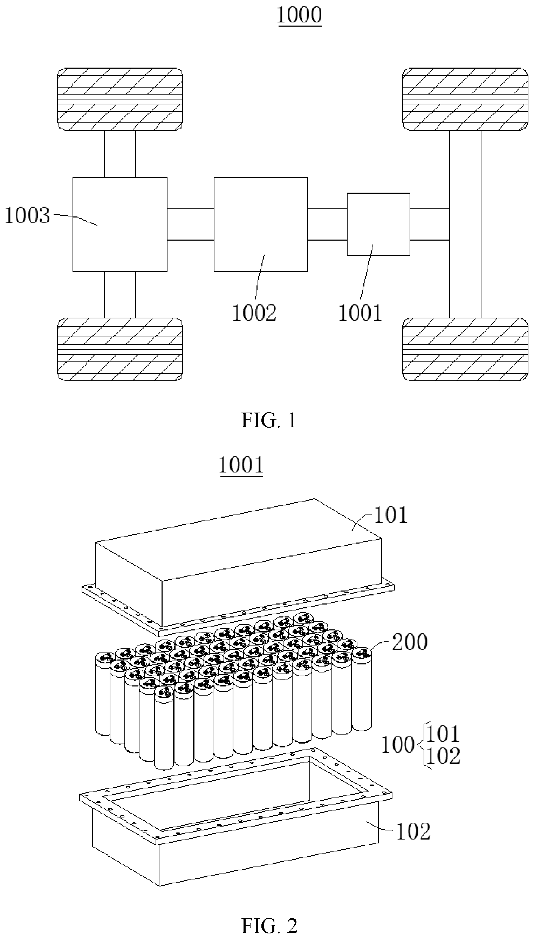

Referring to FIG. 1, FIG. 1 is a schematic structural diagram of a vehicle 1000 according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 1001 inside, where the battery 1001 may be disposed at the bottom, front or rear of the vehicle 1000. The battery 1001 may be configured to supply power to the vehicle 1000. For example, the battery 1001 may be used as an operational power source for the vehicle 1000. The vehicle 1000 may further include a controller 1002 and a motor 1003, where the controller 1002 is configured to control the battery 1001 to supply power to the motor 1003, for example, to satisfy power needs of start, navigation, and driving of the vehicle 1000.

In some embodiments of the present application, the battery 1001 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural exploded view of a battery 1001 according to some embodiments of the present application. The battery 1001 includes a box 100 and a battery cell, where the battery cell is accommodated in the box 100. The box 100 is configured to provide an accommodating space for the battery cell. The box 100 may be a variety of structures. In some embodiments, the box 100 may include a first portion 101 and a second portion 102. The first portion 101 and the second portion 102 fit together to jointly define an accommodating space for accommodating the battery cell. The second portion 102 may be a hollow structure with an opening at one end, the first portion 101 plate-shaped structure, and the first portion 101 covers the opening side of the second portion 102 so that the first portion 101 and the second portion 102 jointly define the accommodating space. Alternatively, both the first portion 101 and the second portion 102 may be hollow structures with an opening at one side, and the opening side of the first portion 101 is engaged with the opening side of the second portion 102. Certainly, the box 100 formed by the first portion 101 and the second portion 102 may be of various shapes, for example, cylinder or cuboid. Multiple battery cells are connected in parallel, series, or series-parallel and then placed into the box 100 formed by snap-fitting the first portion 101 and the second portion 102.

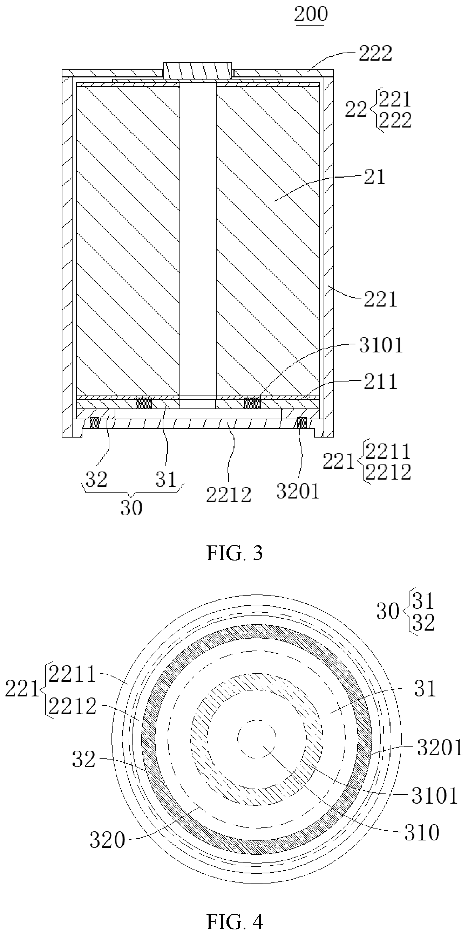

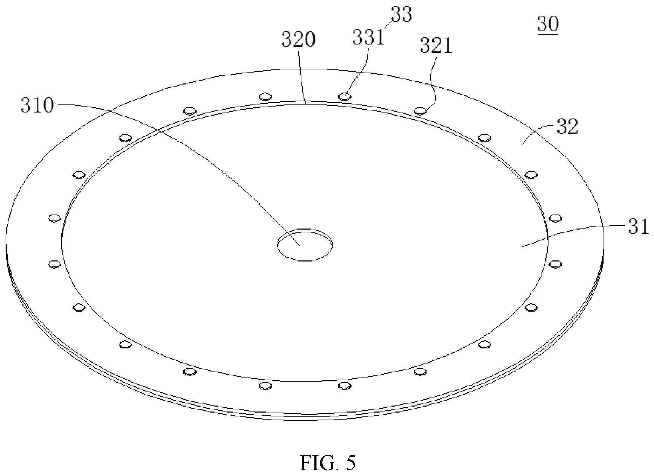

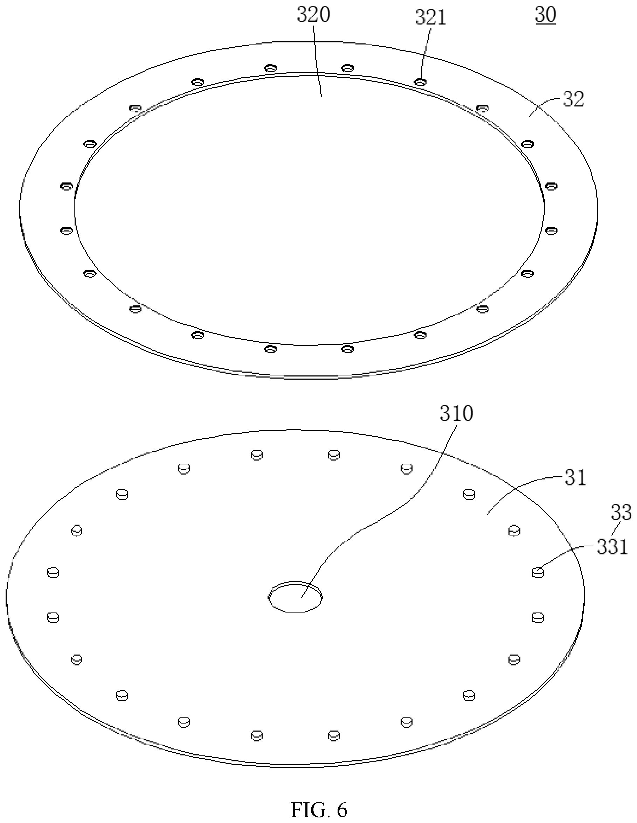

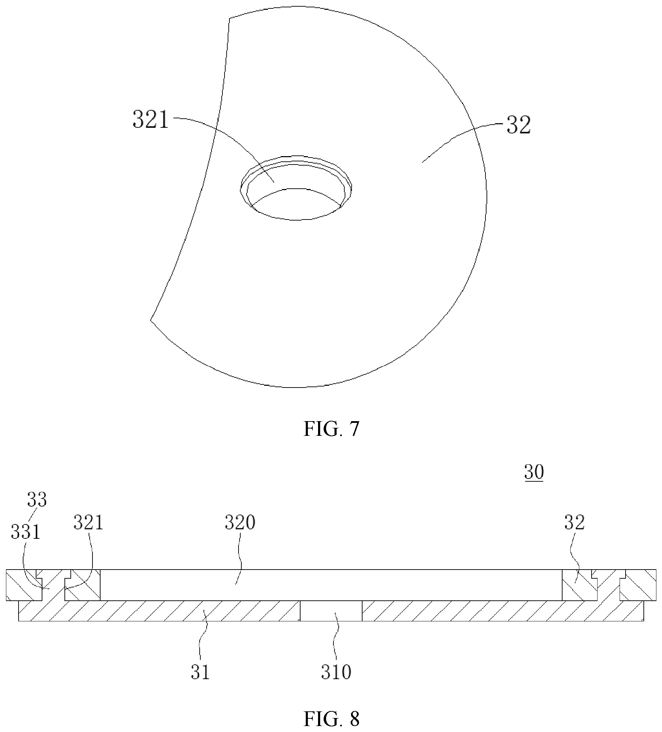

Referring to FIG. 3 to FIG. 8, FIG. 3 is a schematic structural cross-sectional view of a battery cell 200 according to some embodiments of the present application. FIG. 4 is a schematic structural bottom view of a battery cell 200 according to some embodiments of the present application. FIG. 5 is a schematic structural diagram of a current collecting disc 30 according to some embodiments of the present application. FIG. 6 is a schematic structural exploded view of the current collecting disc 30 in FIG. 5. FIG. 7 is a schematic structural diagram of a portion of the second connecting piece 32 of the current collecting disc 30 in FIG. 6. FIG. 8 is a schematic structural cross-sectional view of the current collecting disc 30 in FIG. 5.

An embodiment of the present application provides a battery cell 200, including: a housing body 221; an electrode assembly 21, installed in the housing body 221, the electrode assembly 21 being provided with a tab 211; and a current collecting disc 30, including a first connecting piece 31 and a second connecting piece 32, the first connecting piece 31 being mechanically connected to the second connecting piece 32, where the first connecting piece 31 is welded to the tab 211, and the second connecting piece 32 is welded to the housing body 221.

The housing body 221 refers to a part of the housing 22 of the battery cell 200. The housing 22 includes the housing body 221 and an end cover 222, and the end cover 222 is a component that covers an opening of the housing body 221 to isolate an internal environment of the battery cell 200 from an external environment. The housing body 221 is an assembly configured to cooperate with the end cover 222 to form the internal environment of the battery cell 200, where the formed internal environment can be configured to accommodate the electrode assembly 21, the electrolyte, and other components.

The electrode assembly 21 is installed in the housing body 221, with the housing body 221 accommodating and protecting the electrode assembly 21. The electrode assembly 21 is provided with a tab 211, where the tab 211 is connected to the housing body 221 to allow current to flow between the housing body 221 and the tab 211. In some embodiments, when the housing body 221 is used as the negative electrode of the battery cell 200, the tab 211 is the negative electrode tab. However, it is not excluded that in some battery cells 200, the housing body 221 is used as the positive electrode, in which case the tab 211 is the positive electrode tab.

The current collecting disc 30 refers to a conductive structure connecting the housing body 221 to the tab 211 to achieve current flow between the housing body 221 and the tab 211.

The first connecting piece 31 refers to a sheet-like conductive member of the current collecting disc 30 that is welded to the tab 211. Providing the first connecting piece 31 facilitates welding to the tab 211, reducing the risk of the occurrence of weld cracks in the welding of the tab 211 to the current collecting disc 30. The material of the first connecting piece 31 may be the same as that of the tab 211 to reduce the risk of the occurrence of weld cracks. Certainly, the first connecting piece 31 may be made of a material that is easily welded to the tab 211 to reduce the risk of the occurrence of weld cracks. For example, when the tab 211 is made of copper, the first connecting piece 31 may also be made of copper.

The second connecting piece 32 refers to a sheet-like conductive member of the current collecting disc 30 that is welded to the housing body 221. Providing the second connecting piece 32 facilitates welding to the housing body 221, reducing the risk of the occurrence of weld cracks in the welding of the housing body 221 to the current collecting disc 30. The material of the second connecting piece 32 may be the same as that of the housing body 221 to reduce the risk of the occurrence of weld cracks. Certainly, the second connecting piece 32 may be made of a material that is easily welded to the housing body 221 to reduce the risk of the occurrence of weld cracks. For example, when the housing body 221 is made of steel, the second connecting piece 32 may also be made of steel, and the second connecting piece 32 may also be made of nickel. For example, when the housing body 221 is made of aluminum alloy, the second connecting piece 32 may also be made of aluminum alloy.

Welding the first connecting piece 31 to the tab 211 can enhance welding stability, reduce the risk of the occurrence of weld cracks, and lower the risk of damage to the tab 211 and the electrode assembly 21, improving the current conduction capability and reliability between the first connecting piece 31 and the tab 211.

Welding the second connecting piece 32 to the housing body 221 can enhance welding stability and reduce the risk of the occurrence of weld cracks, and improving the current conduction capability and reliability between the second connecting piece 32 and the housing body 221.

The first connecting piece 31 is mechanically connected to the second connecting piece 32 to allow current to pass between the first connecting piece 31 and the second connecting piece 32. The first connecting piece 31 and the second connecting piece 32 are manufactured to form the current collecting disc 30, and the current collecting disc 30 can be manufactured separately, ensuring stable and reliable connection between the first connecting piece 31 and the second connecting piece 32, providing the current collecting disc 30 with good current conduction capability and current conduction reliability. Additionally, the first connecting piece 31 does not need to be welded to the second connecting piece 32, so as to reduce the risk of the occurrence of weld cracks between the first connecting piece 31 and the second connecting piece 32. As a result, when the current collecting disc 30 is applied to the battery cell 200, the current collecting disc 30 can conduct electricity effectively, improving the quality of the battery cell 200.

In the technical solution of the embodiment of the present application, the first connecting piece 31 is mechanically connected to the second connecting piece 32 to form the current collecting disc 30, such that the first connecting piece 31 is welded to the tab 211 of the battery cell 200, and the second connecting piece 32 is welded to the housing body 221 of the battery cell 200, achieving connection of the current collecting disc 30 to the housing body 221 and the tab 211, enhancing connection stability and reliability. The mechanical connection between the first connecting piece 31 and the second connecting piece 32 can, to some extent, prevent occurrence of cracks due to welding of the first connecting piece 31 and the second connecting piece 32, improve the connection stability and current conduction capability between the first connecting piece 31 and the second connecting piece 32, thereby making the charging and discharging of the battery cell 200 more stable, and thus improving the quality of the battery cell 200.

In some embodiments, the housing body 221 includes a cylinder 2211 and a bottom cover 2212, where the bottom cover 2212 covers one end of the cylinder 2211, and the second connecting piece 32 is welded to the bottom cover 2212.

The cylinder 2211 refers to a cylindrical housing structure forming the main part of the housing body 221, and the bottom cover 2212 refers to a cover structure covering one end of the cylinder 2211, with the bottom cover 2212 covering one end of the cylinder 2211 to form a housing body 221 structure. The bottom cover 2212 and the cylinder 2211 may be separately manufactured and then welded together. Certainly, the bottom cover 2212 and the cylinder 2211 may be integrally formed. The bottom cover 2212 and the end cover 222 respectively cover the two ends of the cylinder 2211 to form the housing 22 of the battery cell 200. The bottom of the housing body 221 refers to the end of the housing body 221 away from the end cover 222. For a housing body 221 including a cylinder 2211 and a bottom cover 2212, the bottom of the housing body 221 refers to the bottom cover 2212.

The second connecting piece 32 is welded to the bottom cover 2212 so as to achieve welding of the second connecting piece 32 to the housing body 221, providing a convenient connection, and further facilitating processing and manufacturing.

In some embodiments, the first connecting piece 31 is connected to the second connecting piece 32 through a riveting post 33.

The riveting post 33 refers to a columnar member that can undergo plastic deformation to rivet two structural components, such as a copper post or a steel post.

Connecting the first connecting piece 31 to the second connecting piece 32 through the riveting post 33 refers to using the riveting post 33 to rivet and connect the first connecting piece 31 to the second connecting piece 32.

Using the riveting post 33 to connect the first connecting piece 31 to the second connecting piece 32 provides convenient connection and ensures a stable and firm connection structure.

In some embodiments, the riveting post 33 includes a first riveting post 331 provided on the first connecting piece 31, and the second connecting piece 32 is provided with a first opening 321 for inserting and riveting the first riveting post 331.

The first riveting post 331 refers to the riveting post 33 provided on the first connecting piece 31.

The first opening 321 refers to a hole structure provided on the second connecting piece 32, and the hole structure is adapted to be inserted and connected to the first riveting post 331 so as to rivet and connect the first riveting post 331 to the second connecting piece 32.

The first riveting post 331 is provided on the first connecting piece 31, the first opening 321 is provided on the second connecting piece 32, and the first riveting post 331 is inserted into the first opening 321, so that the first connecting piece 31 is riveted and connected to the second connecting piece 32, and the connection is convenient and stable.

In some embodiments, an inner diameter of an end of the first opening 321 away from the first connecting piece 31 is larger than an inner diameter of another end thereof.

The inner diameter of the end of the first opening 321 away from the first connecting piece 31 is larger than the inner diameter of the end of the first opening 321 close to the first connecting piece 31, such that when the first riveting post 331 is inserted into the first opening 321 and the first riveting post 331 is deformed to abut against the inner wall of the first opening 321, and the diameter of the end of the first riveting post 331 away from the first connecting piece 31 is larger, making the first riveting post 331 less prone to detachment from the first opening 321, thereby achieving a firm connection between the first connecting piece 31 and the second connecting piece 32.

By setting the inner diameter of the end of the first opening 321 away from the first connecting piece 31 to be larger, a more stable fixed connection with the first riveting post 331 can be achieved during riveting, so that the first connecting piece 31 and the second connecting piece 32 are connected more stably.

In some embodiments, the first opening 321 is configured in a stepped shape, with the inner diameter of the end of the first opening 321 close to the first connecting piece 31 set smaller than the inner diameter of another end thereof, such that the peripheral side of the first riveting post 331 abuts against the inner wall of the first opening 321 and abuts against the step of the stepped first opening 321, thereby stably fixing the second connecting piece 32 and enhancing the structural strength of the riveting.

In some embodiments, the first opening 321 may alternatively be configured as a straight hole, where a straight hole refers to a hole structure with a constant inner diameter. The first riveting post 331 deforms such that the peripheral side of the first riveting post 331 abuts against the inner wall of the first opening 321, achieving an interference fit to fix the second connecting piece 32.

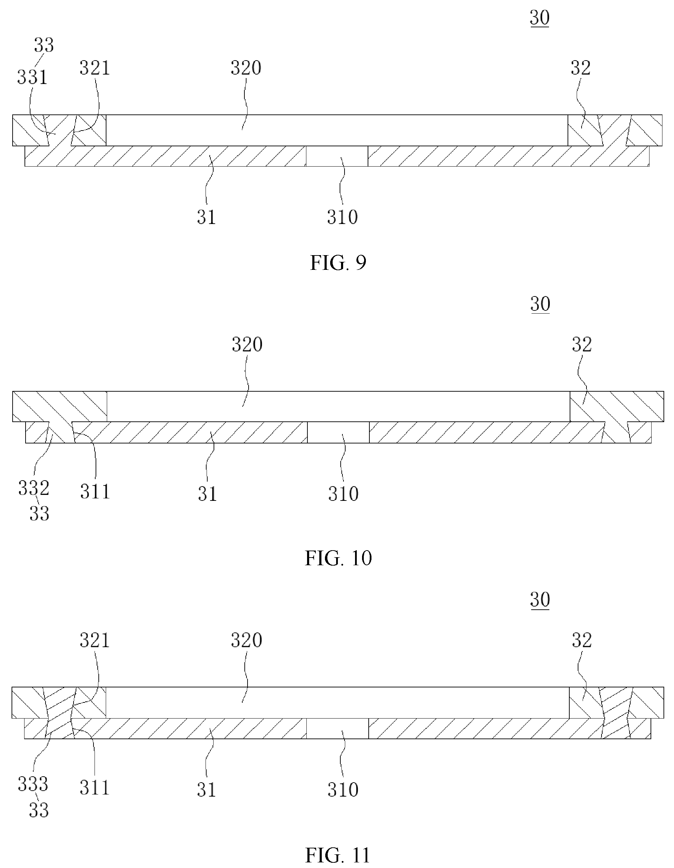

Referring to FIG. 9, FIG. 9 is a schematic structural cross-sectional view of a current collecting disc 30 according to some embodiments of the present application.

In some embodiments, in a direction from the first connecting piece 31 to the second connecting piece 32, the first opening 321 is configured to gradually expand, with the inner diameter of the end of the first opening 321 close to the first connecting piece 31 set smaller than the inner diameter of another end thereof, such that the peripheral side of the first riveting post 331 abuts against the inner wall of the first opening 321 and abuts against the step of the stepped first opening 321, thereby stably fixing the second connecting piece 32 and enhancing the structural strength of the riveting.

Referring to FIG. 6 and FIG. 8, in some embodiments, the first riveting post 331 is integrally formed with the first connecting piece 31.

Integral formation refers to being manufactured and formed as a single piece. The first riveting post 331 being integrally formed with the first connecting piece 31 means that the first riveting post 331 and the first connecting piece 31 are integrally formed to form an integrated structure. The first riveting post 331 may be pressed out from the first connecting piece 31. Certainly, the first riveting post 331 may be welded to the first connecting piece 31. In addition, the first connecting piece 31 may be manufactured through cutting process, forming the first riveting post 331 on the first connecting piece 31 during cutting, so that the first riveting post 331 is integrally formed with the first connecting piece 31. The first connecting piece 31 and the first riveting post 331 may also be formed by casting to form an integral structure of the first riveting post 331 and the first connecting piece 31.

Integrally forming the first riveting post 331 with the first connecting piece 31 can enhance the connection strength between the first riveting post 331 and the first connecting piece 31.

In some embodiments, a thickness of the first connecting piece 31 ranges from 0.1 mm to 0.5 mm. For example, the thickness of the first connecting piece 31 may be 0.1 mm, 0.2 mm, 0.3 mm, 0.4 mm, or 0.5 mm. Certainly, the thickness of the first connecting piece 31 may be set to other values so as to adapt to the welding to the tab 211. Additionally, the thickness of the first connecting piece 31 may be made relatively thin to reduce the space occupied in the housing body 221, thereby increasing the energy density of the battery cell 200.

In some embodiments, a thickness of the second connecting piece 32 ranges from 0.05 mm to 0.5 mm. For example, the thickness of the second connecting piece 32 may be 0.05 mm, 0.06 mm, 0.08 mm, 0.1 mm, 0.15 mm, 0.2 mm, 0.25 mm, 0.3 mm, 0.35 mm, 0.4 mm, 0.45 mm, or 0.5 mm. Certainly, the thickness of the second connecting piece 32 may be set to other values so as to adapt to the welding to the housing body 221. Additionally, the thickness of the second connecting piece 32 may be made relatively thin to reduce the space occupied in the housing body 221, thereby increasing the energy density of the battery cell 200.

Referring to FIG. 10, FIG. 10 is a schematic structural cross-sectional view of a current collecting disc 30 according to some embodiments of the present application.

In some embodiments, the riveting post 33 includes a second riveting post 332 provided on the second connecting piece 32, and the first connecting piece 31 is provided with a second opening 311 for inserting and riveting the second riveting post 332.

The second riveting post 332 refers to the riveting post 33 provided on the second connecting piece 32.

The second opening 311 refers to a hole structure provided on the first connecting piece 31, and the hole structure is adapted to be inserted and connected to the second riveting post 332 so as to rivet and connect the second riveting post 332 to the first connecting piece 31.

The second riveting post 332 is provided on the second connecting piece 32, the second opening 311 is provided on the first connecting piece 31, and the second riveting post 332 is inserted into the second opening 311, so that the first connecting piece 31 is riveted and connected to the second connecting piece 32, and the connection is convenient and stable.

In some embodiments, an inner diameter of an end of the second opening 311 away from the second connecting piece 32 is larger than an inner diameter of another end thereof.

The inner diameter of the end of the second opening 311 away from the second connecting piece 32 is larger than the inner diameter of the end of the second opening 311 close to the second connecting piece 32, such that when the second riveting post 332 is inserted into the second opening 311 and the second riveting post 332 is deformed to abut against the inner wall of the second opening 311, and the diameter of the end of the second riveting post 332 away from the second connecting piece 32 is larger, making the second riveting post 332 less prone to detachment from the second opening 311, thereby achieving a firm connection between the second connecting piece 32 and the first connecting piece 31.

By setting the inner diameter of the end of the second opening 311 away from the second connecting piece 32 to be larger, a more stable fixed connection with the second riveting post 332 can be achieved during riveting, so that the first connecting piece 31 and the second connecting piece 32 are connected more stably.

In some embodiments, in a direction from the second connecting piece 32 to the first connecting piece 31, the second opening 311 is configured to gradually expand, with the inner diameter of the end of the second opening 311 close to the second connecting piece 32 set smaller than the inner diameter of another end thereof, such that the peripheral side of the second riveting post 332 abuts against the inner wall of the second opening 311 and abuts against the step of the stepped second opening 311, thereby stably fixing the first connecting piece 31 and enhancing the structural strength of the riveting.

In some embodiments, the second opening 311 is configured in a stepped shape, with the inner diameter of the end of the second opening 311 close to the second connecting piece 32 set smaller than the inner diameter of another end thereof, such that the peripheral side of the second riveting post 332 abuts against the inner wall of the second opening 311 and abuts against the step of the stepped second opening 311, thereby stably fixing the first connecting piece 31 and enhancing the structural strength of the riveting.

In some embodiments, the second opening 311 may alternatively be configured as a straight hole, where a straight hole refers to a hole structure with a constant inner diameter. The second riveting post 332 deforms such that a peripheral side of the second riveting post 332 abuts against the inner wall of the second opening 311, achieving an interference fit to fix the first connecting piece 31.

In some embodiments, the second riveting post 332 is integrally formed with the second connecting piece 32.

The second riveting post 332 being integrally formed with the second connecting piece 32 means that the second riveting post 332 and the second connecting piece 32 are integrally formed to form an integrated structure. The second riveting post 332 may be pressed out from the second connecting piece 32. Certainly, the second riveting post 332 may be welded to the second connecting piece 32. In addition, the second connecting piece 32 may be manufactured through cutting process, forming the second riveting post 332 on the second connecting piece 32 during cutting, so that the second riveting post 332 is integrally formed with the second connecting piece 32. The second connecting piece 32 and the second riveting post 332 may also be formed by casting to form an integral structure of the second riveting post 332 and the second connecting piece 32.

Integrally forming the second riveting post 332 with the second connecting piece 32 can enhance the connection strength between the second riveting post 332 and the second connecting piece 32.

Referring to FIG. 11, FIG. 11 is a schematic structural cross-sectional view of a current collecting disc 30 according to some embodiments of the present application.

In some embodiments, the riveting post 33 includes a third riveting post 333, the second connecting piece 32 is provided with a first opening 321, the first connecting piece 31 is provided with a second opening 311 corresponding to the position of the first opening 321, and two ends of the third riveting post 333 are respectively inserted and riveted into the first opening 321 and the second opening 311.

The first opening 321 refers to a hole structure provided on the second connecting piece 32.

The second opening 311 refers to a hole structure provided on the first connecting piece 31.

When the first connecting piece 31 is connected to the second connecting piece 32, the position of the first opening 321 corresponds to the position of the second opening 311.

The third riveting post 333 refers to a separately provided riveting post 33, and two ends of the third riveting post 333 are respectively adapted to fit the first opening 321 and the second opening 311, such that one end of the third riveting post 333 can be inserted into the first opening 321, and after being deformed by compression, one end of the third riveting post 333 can abut against the inner wall of the first opening 321 to rivet one end of the third riveting post 333 into the first opening 321. In addition, the other end of the third riveting post 333 can be inserted into the second opening 311, and after being deformed by compression, the other end of the third riveting post 333 can abut against the inner wall of the second opening 311 to rivet the other end of the third riveting post 333 into the second opening 311.

The second opening 311 is provided on the first connecting piece 31, the corresponding first opening 321 is correspondingly provided on the second connecting piece 32, and two ends of the third riveting post 333 are inserted and riveted into the first opening 321 and the second opening 311, so that the first connecting piece 31 is riveted and connected to the second connecting piece 32, and the connection is convenient.

In some embodiments, the inner diameter of the end of the first opening 321 away from the first connecting piece 31 is larger than the inner diameter of the end of the first opening 321 close to the first connecting piece 31, such that when the third riveting post 333 is inserted into the first opening 321 and the third riveting post 333 is deformed to abut against the inner wall of the first opening 321, the diameter of the end of the third riveting post 333 away from the first connecting piece 31 is larger, making the third riveting post 333 less prone to detachment from the first opening 321, thereby achieving a firm connection with the second connecting piece 32.

In some embodiments, the inner diameter of the end of the second opening 311 away from the second connecting piece 32 is larger than the inner diameter of the end of the second opening 311 close to the second connecting piece 32, such that when the third riveting post 333 is inserted into the second opening 311 and the third riveting post 333 is deformed to abut against the inner wall of the second opening 311, and the diameter of the end of the third riveting post 333 away from the second connecting piece 32 is larger, making the third riveting post 333 less prone to detachment from the second opening 311, thereby achieving a fixed connection with the first connecting piece 31.

In some embodiments, the first connecting piece 31 is riveted and connected to the second connecting piece 32 at multiple positions, so that the first connecting piece 31 and the second connecting piece 32 are connected more stably and firmly.

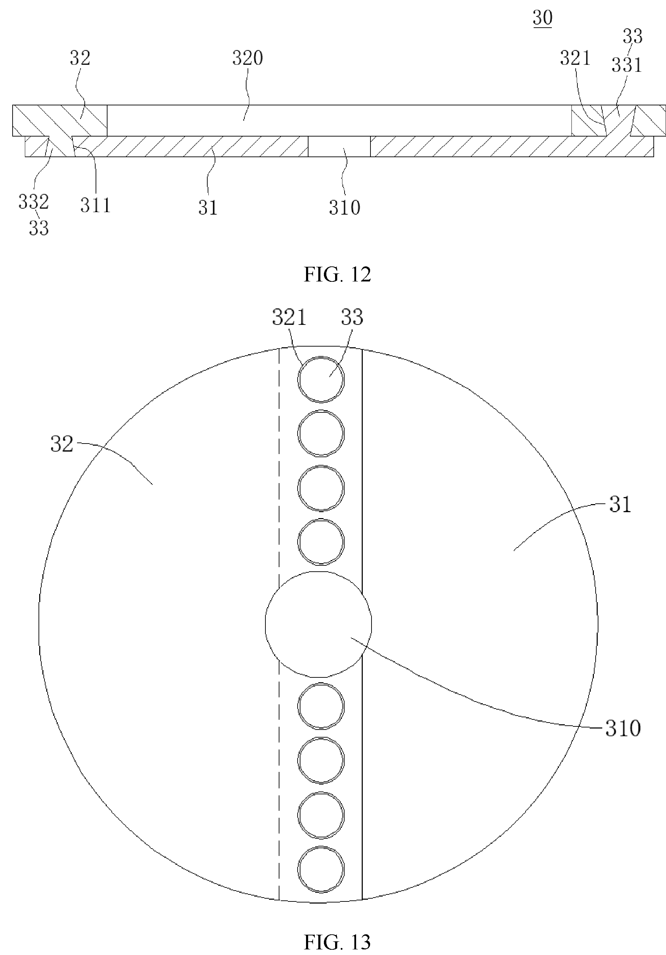

Referring to FIG. 12, FIG. 12 is a schematic structural cross-sectional view of a current collecting disc 30 according to some embodiments of the present application.

In some embodiments, the riveting post 33 includes a first riveting post 331 provided on the first connecting piece 31 and a second riveting post 332 provided on the second connecting piece 32, the second connecting piece 32 is provided with a first opening 321 for inserting and riveting the first riveting post 331, and the first connecting piece 31 is provided with a second opening 311 for inserting and riveting the second riveting post 332.

The first riveting post 331 is provided on the first connecting piece 31, the second riveting post 332 is provided on the second connecting piece 32, the first connecting piece 31 is provided with the second opening 311, and the second connecting piece 32 is provided with the first opening 321, the first riveting post 331 is riveted into the first opening 321, and the second riveting post 332 is riveted into the second opening 311, so as to achieve mechanical connection between various types of riveting posts 33 and the first connecting piece 31 and the second connecting piece 32, providing a more stable connection.

In some embodiments, the first connecting piece 31 may be provided with both the first riveting post 331 and the second opening 311, and the second connecting piece 32 may be provided with a first opening 321 corresponding to the first riveting post 331 and another first opening 321 corresponding to the second opening 311, such that the first riveting post 331 is riveted into the corresponding first opening 321, and the third riveting post 333 is inserted and riveted into the corresponding first opening 321 and second opening 311, thereby achieving mechanical connection between the first connecting piece 31 and the second connecting piece 32 using various types of riveting posts 33, and providing a more stable connection.

In some embodiments, the second connecting piece 32 may be provided with both the second riveting post 332 and the first opening 321, and the first connecting piece 31 may be provided with a second opening 311 corresponding to the second riveting post 332 and a second opening 311 corresponding to the first opening 321, such that the second riveting post 332 is riveted into the corresponding second opening 311, and the third riveting post 333 is inserted and riveted into the corresponding first opening 321 and second opening 311, thereby achieving mechanical connection between the first connecting piece 31 and the second connecting piece 32 using various types of riveting posts 33, and providing a more stable connection.

In some embodiments, the first connecting piece 31 is provided with the first riveting post 331, the second connecting piece 32 is provided with the second riveting post 332, the first connecting piece 31 is provided with a second opening 311 corresponding to the second riveting post 332, the second connecting piece 32 is provided with a first opening 321 corresponding to the first riveting post 331, the first connecting piece 31 is provided with a second opening 311, and the second connecting piece 32 is provided with a first opening 321 corresponding to the second opening 311. The first riveting post 331 is riveted into the first opening 321, the second riveting post 332 is riveted into the second opening 311, and the third riveting post 333 is inserted and riveted into the corresponding first opening 321 and second opening 311, thereby achieving mechanical connection between the first connecting piece 31 and the second connecting piece 32 using various types of riveting posts 33, and providing a more stable connection.

In some embodiments, the first connecting piece 31 and the second connecting piece 32 may also be mechanically connected using rivets, providing a convenient connection without welding, thereby preventing the occurrence of weld cracks between the first connecting piece 31 and the second connecting piece 32 to some extent.

Referring to FIG. 3, FIG. 8 to FIG. 12, in some embodiments, a height of at least one riveting post 33 protruding from a surface of the first connecting piece 31 away from the second connecting piece 32 is less than or equal to 0.1 mm.

Due to the small dimension of a single riveting post 33, the first connecting piece 31 and the second connecting piece 32 are generally riveted and connected together using multiple riveting posts 33 to ensure a firm connection between the first connecting piece 31 and the second connecting piece 32.

The height of at least one riveting post 33 protruding from the surface of the first connecting piece 31 away from the second connecting piece 32 is less than or equal to 0.1 mm, that is, among the multiple riveting posts 33 riveting the first connecting piece 31 to the second connecting piece 32, one or more or all of the riveting posts 33 may protrude from the first connecting piece 31, and the riveting posts 33 protrude from the first connecting piece 31 in a direction away from the second connecting piece 32, and the height of the riveting post 33 protruding from the first connecting piece 31 needs to be less than or equal to 0.1 mm.

Since the tab 211 of the electrode assembly 21 has a certain deformation space within the housing body 221, setting the height of at least one riveting post 33 protruding from the surface of the first connecting piece 31 away from the second connecting piece 32 to be less than or equal to 0.1 mm allows for a wider design range for the dimension of the riveting post 33 and facilitates the installation and use of the riveting post 33 to rivet and connect the first connecting piece 31 to the second connecting piece 32.

In some embodiments, an end of at least one riveting post 33 away from the second connecting piece 32 is flush with a surface of the first connecting piece 31 away from the second connecting piece 32. That is, among the multiple riveting posts 33 riveting the first connecting piece 31 to the second connecting piece 32, an end face of one or more or all of the riveting posts 33 away from the second connecting piece 32 is flush with the surface of the first connecting piece 31 away from the second connecting piece 32.

Setting the end of the riveting post 33 away from the second connecting piece 32 to be flush with the surface of the first connecting piece 31 away from the second connecting piece 32 facilitates welding of the first connecting piece 31 to the tab 211, reducing the effect of the riveting post 33 on the welding of the tab 211 to the first connecting piece 31.

In some embodiments, an end of at least one riveting post 33 away from the second connecting piece 32 is recessed relative to a surface of the first connecting piece 31 away from the second connecting piece 32. That is, among the multiple riveting posts 33 riveting the first connecting piece 31 to the second connecting piece 32, the end face of one or more or all of the riveting posts 33 away from the second connecting piece 32 is recessed relative to the surface of the first connecting piece 31 away from the second connecting piece 32.

Setting the end of the riveting post 33 away from the second connecting piece 32 to be recessed relative to the surface of the first connecting piece 31 away from the second connecting piece 32 can reduce the effect of the riveting post 33 on welding when the first connecting piece 31 is welded to the tab 211, thereby improving welding quality.

In some embodiments, an end of at least one riveting post 33 away from the first connecting piece 31 is flush with a surface of the second connecting piece 32 away from the first connecting piece 31. That is, among the multiple riveting posts 33 riveting the first connecting piece 31 to the second connecting piece 32, an end face of one or more or all of the riveting posts 33 away from the first connecting piece 31 is flush with the surface of the second connecting piece 32 away from the first connecting piece 31.

Setting the end of the riveting post 33 away from the first connecting piece 31 to be flush with the surface of the second connecting piece 32 away from the first connecting piece 31 facilitates welding of the second connecting piece 32 to the housing body 221, reducing the effect of the riveting post 33 on the welding of the second connecting piece 32 to the housing body 221.

In some embodiments, an end of at least one riveting post 33 away from the first connecting piece 31 is recessed relative to a surface of the second connecting piece 32 away from the first connecting piece 31. That is, among the multiple riveting posts 33 riveting the first connecting piece 31 to the second connecting piece 32, the end face of one or more or all of the riveting posts 33 away from the first connecting piece 31 is recessed relative to the surface of the second connecting piece 32 away from the first connecting piece 31.

Setting the end of the riveting post 33 away from the first connecting piece 31 to be recessed relative to the surface of the second connecting piece 32 away from the first connecting piece 31 can reduce the effect of the riveting post 33 on welding when the second connecting piece 32 is welded to the housing body 221, thereby improving welding quality.

Referring to FIG. 5 to FIG. 12, in some embodiments, the first connecting piece 31 and the second connecting piece 32 are stacked, and the second connecting piece 32 is provided with an opening 320 exposing a partial region of the first connecting piece 31.

Stacking refers to the first connecting piece 31 and the second connecting piece 32 being stacked in a thickness direction. Stacking the first connecting piece 31 and the second connecting piece 32 facilitates the mechanical connection between the first connecting piece 31 and the second connecting piece 32.

The opening 320 refers to a through-hole structure provided on the second connecting piece 32 and penetrating the thickness of the second connecting piece 32.

Since the first connecting piece 31 and the second connecting piece 32 are stacked, providing the opening 320 on the second connecting piece 32 can expose a partial region of the first connecting piece 31 from the opening 320, allowing the first connecting piece 31 to be welded to the tab 211 through the opening 320, facilitating the connection.

Stacking the first connecting piece 31 and the second connecting piece 32 facilitates the connection between the first connecting piece 31 and the second connecting piece 32. Providing the opening 320 on the second connecting piece 32 to expose a partial region of the first connecting piece 31 facilitates welding of the first connecting piece 31 to the tab 211.

In some embodiments, an outer profile of the second connecting piece 32 is circular, the first connecting piece 31 is circular, and the first connecting piece 31 is coaxially arranged with the second connecting piece 32.

The outer profile of the second connecting piece 32 being circular means that the second connecting piece 32 is overall set to be a circular shape, making the second connecting piece 32 better suited for application in a cylindrical battery cell 200. Additionally, the second connecting piece 32 is set to be circular. When the second connecting piece 32 is applied to the cylindrical battery cell 200, this facilitates welding of the second connecting piece 32 to the housing body 221 without rotating the second connecting piece 32 in a direction of the central axis of the cylindrical battery cell 200. In addition, the second connecting piece 32 is set to be circular, and a welding zone 3201 formed by welding the second connecting piece 32 to the housing body 221 may be set to be circular, facilitating welding. The welding zone 3201 is configured to have a larger area, enhancing the firmness and reliability of welding of the second connecting piece 32 to the housing body 221, and reducing internal resistance.

Setting the first connecting piece 31 to be circular means that the first connecting piece 31 is overall set to be a circular structure. The first connecting piece 31 is set to be circular, and when the first connecting piece 31 is applied to the cylindrical battery cell 200, this facilitates welding of the first connecting piece 31 to the tab 211 without rotating the first connecting piece 31 in a direction of the central axis of the cylindrical battery cell 200.

The first connecting piece 31 being coaxially arranged with the second connecting piece 32 means that the central axis of the first connecting piece 31 is coaxial with the central axis of the second connecting piece 32, facilitating the positioning of the first connecting piece 31 and the second connecting piece 32, thereby facilitating the application in the cylindrical battery cell 200.

The outer profile of the second connecting piece 32 is set to be circular, facilitating the application in the cylindrical battery cell 200, and facilitating welding to the housing body 221. The first connecting piece 31 is set to be circular and coaxially arranged with the second connecting piece 32, facilitating the application in the cylindrical battery cell 200 for welding to the tab 211.

In some embodiments, the opening 320 on the second connecting piece 32 is circular.

The opening 320 on the second connecting piece 32 is set to be circular, facilitating the application in the cylindrical battery cell 200, and also facilitates the design and manufacturing of the opening 320. The portion exposed the first connecting piece 31 is also circular, facilitating welding of the first connecting piece 31 to the tab 211 and increasing a welding area between the first connecting piece 31 and the tab 211, thereby enhancing welding stability. In addition, the opening 320 is set to be circular, and the first connecting piece 31 is set to be circular, the weld mark 3101 formed by welding the first connecting piece 31 to the tab 211 can be circular, facilitating welding, increasing the welding area, reducing internal resistance, and improving current conduction capability.

In some embodiments, the opening 320 may be set to be other shapes, such as an ellipse or a polygon.

Referring to FIG. 5 to FIG. 13, FIG. 13 is a schematic structural cross-sectional view of a current collecting disc 30 according to some embodiments of the present application.

In some embodiments, a through hole 310 is provided at a central position of the current collecting disc 30.

The through hole 310 refers to a hole structure penetrating the structural component.

The central position of the current collecting disc 30 refers to a geometric center position of the current collecting disc 30. For example, when the current collecting disc 30 is circular, the central position of the current collecting disc 30 is the center of the current collecting disc 30. When the current collecting disc 30 is a regular polygon, the central position of the current collecting disc 30 is a symmetry center of the current collecting disc 30.

Providing the through hole 310 at the central position of the current collecting disc 30 can provide a positioning function during assembly of the current collecting disc 30, facilitating welding of the first connecting piece 31 of the current collecting disc 30 to the tab 211 and welding of the second connecting piece 32 of the current collecting disc 30 to the housing body 221.

In some embodiments, the through hole 310 is circular, elliptical, or polygonal. Setting the through hole 310 to be circular, elliptical, or polygonal facilitates the design and manufacturing.

Referring to FIG. 5 to FIG. 12, in some embodiments, the first connecting piece 31 is provided with a through hole 310 at a position corresponding to the center of the opening 320.

The through hole 310 refers to a hole structure penetrating the structural component.

Since the through hole 310 is located on the first connecting piece 31 at a position corresponding to the center of the opening 320, the through hole 310 of the first connecting piece 31 actually penetrates the entire current collecting disc 30. The first connecting piece 31 is provided with the through hole 310 corresponding to the center of the opening 320, and the through hole 310 is also located at the central position of the current collecting disc 30.

Providing the through hole 310 on the first connecting piece 31 can provide a positioning function during welding of the first connecting piece 31 to the tab 211. Additionally, a pressure relief mechanism is provided on a side of the housing body 221 corresponding to the current collecting disc 30, and when the battery cell 200 swells and relieves pressure, this facilitates the ejection of active material from the housing body 221, reducing the risk of the first connecting piece 31 blocking the pressure relief mechanism and enhancing the reliability of the battery cell 200.

The pressure relief mechanism refers to structural components such as a pressure relief valve or an explosion-proof valve on the battery cell 200. When the battery cell 200 experiences abnormal swelling, the pressure relief mechanism is used for gas or liquid generated in the battery cell 200 to be released, relieving pressure in the battery cell 200.

In some embodiments, the through hole 310 is circular, elliptical, or polygonal.

Setting the through hole 310 to be circular, elliptical, or polygonal facilitates the design and manufacturing. When the through hole 310 is set to be a polygon, a pressure relief mechanism is provided on the side of the housing body 221 corresponding to the current collecting disc 30, and when the battery cell 200 swells and relieves pressure, the first connecting piece 31 can be torn from a corner edge of the through hole 310, facilitating the ejection of active material from the housing body 221, reducing the risk of the first connecting piece 31 blocking the pressure relief mechanism, and enhancing the reliability of the battery cell 200.

Referring to FIG. 13, in some embodiments, one side of the first connecting piece 31 is stacked with one side of the second connecting piece 32, and one side of the first connecting piece 31 is riveted and connected to one side of the second connecting piece 32 through the riveting post 33. This structure can simplify the structure of the current collecting disc 30, reduce material usage, and lower costs.

According to some embodiments of the present application, the present application provides a battery cell 200, including a housing body 221, an electrode assembly 21, and a current collecting disc 30. The electrode assembly 21 is installed in the housing body 221, and the electrode assembly 21 is provided with a tab 211. The current collecting disc 30 includes a first connecting piece 31 and a second connecting piece 32, where the first connecting piece 31 is riveted and connected to the second connecting piece 32 through a riveting post 33, the first connecting piece 31 is welded to the tab 211, and the second connecting piece 32 is welded to the housing body 221. The first connecting piece 31 and the second connecting piece 32 are stacked, and the second connecting piece 32 is provided with an opening 320 exposing a partial region of the first connecting piece 31. Stacking the first connecting piece 31 and the second connecting piece 32 facilitates the connection between the first connecting piece 31 and the second connecting piece 32. Providing the opening 320 on the second connecting piece 32 to expose a partial region of the first connecting piece 31 facilitates welding of the first connecting piece 31 to the tab 211. The outer profile of the second connecting piece 32 is circular, the first connecting piece 31 is circular, and the first connecting piece 31 is coaxially arranged with the second connecting piece 32. Setting the outer profile of the second connecting piece 32 to be circular facilitates the application in the cylindrical battery cell 200, facilitating welding to the housing body 221. Setting the first connecting piece 31 to be circular and coaxially arranged with the second connecting piece 32 facilitates the application in the cylindrical battery cell 200 for welding to the tab 211. The second connecting piece 32 is set to be circular, and a welding zone 3201 formed by welding the second connecting piece 32 to the housing body 221 may be set to be circular, facilitating welding. The welding zone 3201 is configured to have a larger area, enhancing the firmness and reliability of welding of the second connecting piece 32 to the housing body 221, and reducing internal resistance.

According to some embodiments of the present application, the present application also provides a battery, including the battery cell as described in any of the above solutions.

According to some embodiments of the present application, the present application also provides an electric apparatus, including the battery as described in any of the above solutions.

The electric apparatus may be any device or system that uses a battery as described above.

In conclusion, it should be noted that the foregoing embodiments are for description of the technical solutions of the present application only rather than for limiting the present application. Although the present application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell, **characterized by** comprising:
a housing body;
an electrode assembly, installed in the housing body, the electrode assembly being provided with a tab; and
a current collecting disc, comprising a first connecting piece and a second connecting piece, the first connecting piece being mechanically connected to the second connecting piece; wherein
the first connecting piece is welded to the tab, and the second connecting piece is welded to the housing body.

2. The battery cell according to claim 1, **characterized in that** the first connecting piece is connected to the second connecting piece through a riveting post.

3. The battery cell according to claim 2, **characterized in that** the riveting post comprises a first riveting post provided on the first connecting piece, and the second connecting piece is provided with a first opening for inserting and riveting the first riveting post.

4. The battery cell according to claim 3, **characterized in that** an inner diameter of an end of the first opening away from the first connecting piece is larger than an inner diameter of another end thereof.

5. The battery cell according to claim 3 or 4, **characterized in that** the first riveting post is integrally formed with the first connecting piece.

6. The battery cell according to any one of claims 2 to 5, **characterized in that** the riveting post comprises a second riveting post provided on the second connecting piece, and the first connecting piece is provided with a second opening for inserting and riveting the second riveting post.

7. The battery cell according to claim 6, **characterized in that** an inner diameter of an end of the second opening away from the second connecting piece is larger than an inner diameter of another end thereof.

8. The battery cell according to claim 6 or 7, **characterized in that** the second riveting post is integrally formed with the second connecting piece.

9. The battery cell according to any one of claims 2 to 8, **characterized in that** the riveting post comprises a third riveting post, the second connecting piece is provided with the first opening, the first connecting piece is provided with the second opening corresponding to the position of the first opening, and two ends of the third riveting post are respectively inserted and riveted into the first opening and the second opening.

10. The battery cell according to any one of claims 2 to 9, **characterized in that** a height of at least one riveting post protruding from a surface of the first connecting piece away from the second connecting piece is less than or equal to 0.1 mm; and/or
an end of at least one riveting post away from the second connecting piece is flush with a surface of the first connecting piece away from the second connecting piece; and/or
an end of at least one riveting post away from the second connecting piece is recessed relative to a surface of the first connecting piece away from the second connecting piece; and/or
an end of at least one riveting post away from the first connecting piece is flush with a surface of the second connecting piece away from the first connecting piece; and/or
an end of at least one riveting post away from the first connecting piece is recessed relative to a surface of the second connecting piece away from the first connecting piece.

11. The battery cell according to any one of claims 1 to 10, **characterized in that** the first connecting piece and the second connecting piece are stacked, and the second connecting piece is provided with an opening exposing a partial region of the first connecting piece.

12. The battery cell according to claim 11, **characterized in that** an outer profile of the second connecting piece is circular, the first connecting piece is circular, and the first connecting piece is coaxially arranged with the second connecting piece.

13. The battery cell according to claim 11 or 12, **characterized in that** the opening is circular.

14. The battery cell according to claim 13, **characterized in that** the first connecting piece is provided with a through hole at a position corresponding to the center of the opening.

15. A battery, **characterized by** comprising the battery cell according to any one of claims 1 to 14.

16. An electric apparatus, **characterized by** comprising the battery according to claim 15.
